# EUROPÄISCHE PATENTSCHRIFT

(11) **EP 3 559 382 B1**
(45) Veröffentlichungstag und Bekanntmachung des Hinweises auf die Patenterteilung: **14.07.2021**
(21) Anmeldenummer: 17821888.9
(22) Anmeldetag: 20.12.2017
(51) Int. Cl.: E05B 77/36, E05B 77/40, E05B 83/18, E05B 85/26

(54) **SCHLOSS, INSBESONDERE RÜCKENLEHNEN- ODER HECKKLAPPENSCHLOSS**
LOCK, PARTICULARLY FOR BACKREST OR BOOT COMPARTMENT
SERRURE, EN PARTICULIER POUR DOSSIER OU HAYON

(30) Priorität: 22.12.2016 DE 102016225993; 03.04.2017 DE 102017205656
(43) Veröffentlichungstag der Anmeldung: 30.10.2019
(73) Patentinhaber: Witte Automotive GmbH, 42551 Velbert (DE)
(72) Erfinder: GELLHAUS, Bernd, 44805 Bochum (DE); WIEMANN, Matthias, 44799 Bochum (DE); JANSSEN, Thorsten, 42551 Velbert (DE); AYDIN, Selcuk, 45731 Waltrop (DE)
(74) Vertreter: Liedtke & Partner Patentanwälte
(86) Internationale Anmeldenummer: PCT/EP2017/083729
(87) Internationale Veröffentlichungsnummer: WO 2018/115072

(56) Entgegenhaltungen:
- EP-A1- 0 952 288
- DE-A1- 3 927 445
- DE-A1- 10 343 622
- DE-A1-102007 003 733
- DE-A1-102008 010 002
- DE-A1-102012 102 724
- DE-U1-202008 011 086

## Beschreibung

Die vorliegende Erfindung betrifft ein Schloss, insbesondere ein Rückenlehnen-oder Heckklappen- oder Kofferraumdeckelschloss für ein Kraftfahrzeug.

Ein Schloss der eingangs genannten Art wird beispielsweise in Kraftfahrzeugen zur Verriegelung von Rückenlehnen, Türen, Hauben, Heckklappen, Kofferraumdeckeln oder dergleichen verwendet. Zum Entriegeln des Schlosses wird mittels eines Motors ein aus einer Sperrklinke, einer Drehfalle und einem Schließelement, insbesondere Schließelement gebildetes Gesperre in Bewegung versetzt, um die Sperrklinke von einer Sperrstellung in eine Entriegelungsstellung zu verstellen. In der Entriegelungsstellung der Sperrklinke ist die Drehfalle freigegeben, um von einer Geschlossenstellung in eine Offenstellung aufdrehen zu können.

Aus der DE 39 27 445 A1 und DE 103 43 622 A1 sind jeweils ein Schloss mit einer Drehfalle und Sperrklinke bekannt. Zur Vermeidung von Klappergeräuschen ist ein Hebelarm mit einer zusätzlichen Sperrtriebsteuerfläche bzw. ein Druckteil vorgesehen, die jeweils im Verschlusszustand des Schließbügels sperrend an diesem eingreifen bzw. mit diesem zusammenwirken. Die DE 10 2012 102724 A1 offenbart ein Schloss mit Drehfalle, Sperrklinke und zweiteiligem Ruhigstellungshebel, wobei eine Öffnungsbewegung der Drehfalle einen ersten Teil des Ruhigstellungshebels aushebt und ein zweiter Teil den ersten in abgehobener Stellung fixiert.

Der Erfindung liegt die Aufgabe zugrunde, ein verbessertes Schloss anzugeben, welches insbesondere in Geschlossenstellung und bei niedrigen Dichtungsdrücken das Trennen der Sperrflächen von Sperrklinke und Drehfalle aufgrund von dynamischen Lastwechselreaktionen der Klappe während der Fahrt verhindert und ein einfaches Öffnen des Ruhigstellungshebels ermöglicht.

Die Aufgabe wird erfindungsgemäß gelöst durch ein Schloss mit den Merkmalen des Anspruchs 1.

Vorteilhafte Ausgestaltungen der Erfindung sind Gegenstand der Unteransprüche.

Das erfindungsgemäße Schloss, insbesondere für eine Rückenlehne oder eine Heckklappe eines Kraftfahrzeuges, umfasst zumindest eine Drehfalle mit einem Schließelement, einen zugeordneten Sperrmechanismus, insbesondere eine Sperrklinke, zum Sperren der Drehfalle in eine Geschlossenstellung, in welcher die Drehfalle und das Schließelement schließend gekoppelt sind, einen Antriebsmechanismus zumindest zum Öffnen des Sperrmechanismus und einen Ruhigstellungshebel, der mit dem Sperrmechanismus gekoppelt ist, wobei der Ruhigstellungshebel eine Außenkontur aufweist, welche das Schließelement in der Geschlossenstellung selbsthemmend in der Drehfalle hält. Dabei ist der Ruhigstellungshebel zwei- oder mehrteilig ausgebildet. Dies ermöglicht eine funktionale Trennung von Ruhigstellung des Schließelements und Auslösen oder Öffnen des Ruhigstellungshebels.

Ein solcher Ruhigstellungshebel ersetzt herkömmliche weiche und insbesondere nachgiebige Schlosspuffer oder Dichtungselemente. Der Ruhigstellungshebel ermöglicht insbesondere eine Vermeidung von aus dem Stand der Technik bekannten störenden Klappergeräuschen beim Schloss in der Geschlossenstellung, in welcher das Schließelement in der Drehfalle gehalten ist. Durch den selbsthemmenden Eingriff des Ruhigstellungshebels an das Schließelement ist eine einfache und sichere Geschlossenstellung, insbesondere ein sicheres Eingreifen des Schließelements in der Drehfalle ermöglicht, wobei das Schließelement mittels des Ruhigstellungshebel gegen die Drehfalle gedrückt und klemmend und insbesondere geräuscharm und weitestgehend klapperfrei gehalten wird.

In einer möglichen Ausführungsform ist der Ruhigstellungshebel als ein umspritztes Metallteil, insbesondere umspritztes Stahlteil ausgebildet. Eine solche Ausbildung des Ruhigstellungshebels, insbesondere als ein Metallteil ist weitgehend temperaturunabhängig. Hierdurch ist gegenüber den stark temperaturabhängigen und bekannten Pufferelementen ein weitgehend temperaturfester und/oder konturfester Ruhigstellungshebel ermöglicht.

In einer weiteren Ausführungsform ist die Außenkontur als eine Exzenterkontur ausgebildet. Die Außenkontur weist insbesondere eine gekrümmte und/oder schräg verlaufende Anschlag- oder Keilfläche auf, welche in der Geschlossenstellung gegen das Schließelement drückt. Hierdurch ist eine einfache, sichere und selbsthemmende Verbindung zwischen Ruhigstellungshebel und Schließelement gegeben. Die gekrümmte und/oder schräge Anschlagfläche ermöglicht eine durch Reibung verursachte Haltekraft zwischen dem Ruhigstellungshebel und dem Schließelement, so dass diese zueinander selbsthemmend gehalten sind. Dabei ist die Anschlagfläche oder Keilfläche derart ausgelegt, dass eine selbsthemmende Haltekraft zwischen Ruhigstellungshebel und Schließelement eingestellt ist.

In einer möglichen Ausgestaltung weist die gekrümmte und/oder schräge Anschlagfläche einen Keilwinkel in einem Bereich von 8° bis 15°, insbesondere von 10° bis 12° auf. Eine solche gekrümmte Anschlagfläche ermöglicht einen Toleranzausgleich der Komponenten, insbesondere von Schließelement und Ruhigstellungshebel in einem Bereich zwischen 1 mm und 2,5 mm, insbesondere 1,5 mm und 2 mm.

Darüber hinaus ist vorgesehen, dass beim Öffnen des Sperrmechanismus der Ruhigstellungshebel das Schließelement freigibt. In Offenstellung des Schlosses, in welcher die Drehfalle und das Schließelement Außereingriff sind, ist der Ruhigstellungshebel in einer Ruhe- oder Offenstellung mittels des Sperrmechanismus und/oder der Drehfalle gehalten und in dieser insbesondere gespeichert gehalten. Erst wenn das Schloss wieder zurück in die Verrastung fällt und somit das Gesperre zwischen Drehfalle und Sperrmechanismus eingerastet ist, kann der Ruhigstellungshebel aus der gespeicherten Ruhe- oder Offenstellung in die selbsthemmende Eingriffsstellung mit dem Schließelement fallen.

Beispielsweise kann der Sperrmechanismus einen oberflächenseitig abstehenden Öffnungsnocken aufweisen. Der Ruhigstellungshebel weist insbesondere eine oberflächenseitig abstehende Anschlag- oder Mitnahmekontur auf. Dabei kann der Öffnungsnocken des Sperrmechanismus beim Öffnen des Schlosses in Eingriff mit der Anschlag- oder Mitnahmekontur des Ruhigstellungshebels kommen.

In einer möglichen Ausführungsform weist die Mitnahmekontur einen Öffnungsbereich und einen Speicherbereich auf. Beispielsweise gleitet der Öffnungsnocken beim Öffnen des Schlosses entlang des Öffnungsbereichs der Mitnahmekontur und nimmt den Ruhigstellungshebel mit. Anschließend greift der Öffnungsnocken des Sperrmechanismus beim weiteren Öffnen des Schlosses bis zur Freigabe des Schließelementes in den Speicherbereich der Mitnahmekontur ein und hält den Ruhigstellungshebel in der Ruhe- oder Offenstellung. In dieser Ruhe- oder Offenstellung steht der Ruhigstellungshebel nicht mehr im Eingriff mit dem Schließelement.

Nach Öffnen des Schlosses und somit bei freigegebenem Schließelement ist der Ruhigstellungshebel mittels der Drehfalle in seiner Ruhe- oder Offenstellung gehalten. Hierzu weist die Drehfalle beispielsweise eine Speicherrippe auf, welche nach Freigabe des Schließelements den Ruhigstellungshebel in der Ruhestellung hält.

In einer weiteren Ausführung ist nach Öffnen des Schlosses und somit bei freigegebenem Schließelement der Ruhigstellungshebel mittels einer oder mehrerer Sperrklinken in seiner Ruhe- oder Offenstellung gehalten. Hierzu weist die speichernde Sperrklinke beispielsweise eine Speicherkontur auf, welche nach Freigabe des Schließelements den Ruhigstellungshebel in der Ruhestellung hält.

In einer weiteren Ausführungsform greift der Ruhigstellungshebel erst nach Kopplung des Schließelements und der Drehfalle und nach erfolgtem Sperren des Sperrmechanismus wieder in das in der Geschlossenstellung angeordnete Schließelement selbsthemmend ein.

In einer möglichen Ausführungsform umfasst der Ruhigstellungshebel einen separaten Keilhebel und einen separaten Steuerhebel. Dabei können der Keilhebel und der Steuerhebel beispielsweise auf einer gemeinsamen Drehachse gelagert sein. Darüber hinaus können der Keilhebel und der Steuerhebel über mindestens ein Federelement, insbesondere eine Kupplungsfeder, eine Druckfeder und/oder eine Zugfeder, miteinander mechanisch gekoppelt, insbesondere verbunden sein.

Die Erfindung bezieht sich des Weiteren auf eine Verwendung des Schlosses als Rückenlehnen- oder Heckklappen- oder Heckdeckelschloss. Ausführungsbeispiele der Erfindung werden im Folgenden anhand von Zeichnungen näher erläutert.

Darin zeigen:
Die Figuren 1 bis 8 nicht erfindungsgemäße Ausführungsbeispiele.
- Figur 1: schematisch in Draufsicht ein Ausführungsbeispiel für ein Schloss in Geschlossenstellung, dargestellt mit Schließelement und mit einem Ruhigstellungshebel im Eingriff mit dem Schließelement,
- Figur 2: schematisch in Draufsicht ein Schloss mit einem Schließelement, das im Außereingriff mit dem Ruhigstellungshebel gekommen ist,
- Figur 3: schematisch in Draufsicht ein Schloss mit einem Ruhigstellungshebel im Außereingriff mit dem Schließelement und in gespeicherter Ruhe- oder Offenstellung,
- Figur 4: schematisch in Draufsicht ein sich öffnendes Schloss und den weiterhin in gespeicherter Offenstellung gehaltenen Ruhigstellungshebel,
- Figur 5: schematisch in Draufsicht ein offenes Schloss mit einem in eine Vorraste (Vorgesperre) fallenden Sperrmechanismus und weiterhin in gespeicherter Offenstellung gehaltenem Ruhigstellungshebel,
- Figur 6: schematisch in Draufsicht ein Schloss mit einem in eine Hauptraste ((Haupt-)Gesperre) fallenden Sperrmechanismus und Freikommen des Ruhigstellungshebels aus der gespeicherten Offenstellung,
- Figur 7: schematisch in Draufsicht ein Schloss mit einem in eine Hauptraste (Gesperre) eingefallenen Sperrmechanismus und Freikommen des Ruhigstellungshebels aus der gespeicherten Offenstellung zum Einfallen ins Schließelement,
- Figur 8: schematisch in Draufsicht ein Ausführungsbeispiel für ein Schloss in Geschlossenstellung, dargestellt mit eingefallenem Schließelement und mit am Schließelement eingefallenem Ruhigstellungshebel, und
- Figuren 9 bis 18: schematisch in verschiedenen Darstellungen ein erfindungsgemäßes Ausführungsbeispiel für ein Schloss mit einem mehrteiligen Ruhigstellungshebel.

Einander entsprechende Teile sind in allen Figuren mit den gleichen Bezugszeichen versehen.

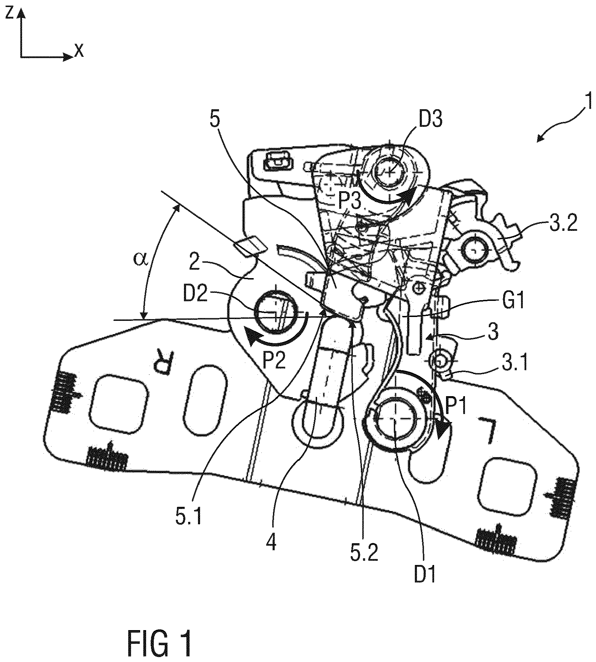

**Figur 1** zeigt schematisch ein Schloss 1 in geschlossenem Zustand (= Geschlossenzustand) in Draufsicht von oben. Das Schloss 1 ist beispielsweise ein Schloss für eine Rückenlehne, eine Heckklappe oder einen Heckdeckel eines Kraftfahrzeuges. Alternativ kann es sich auch um ein Türschloss oder um ein Motorhaubenschloss handeln.

Das Schloss 1 umfasst als Gesperre G1 zumindest eine Drehfalle 2 und einen Sperrmechanismus 3, welche beispielsweise rastend ineinander greifen und welcher ein Öffnen der in ein Schließelement 4, zum Beispiel einen Schließelement, eingefallenen Drehfalle 2 sperrt. Je nach Auslegung umfasst das Schloss 1 einen nicht näher dargestellten manuellen oder motorischen Antriebsmechanismus zum Öffnen des Sperrmechanismus 3 und zur Entkopplung der Drehfalle 2 vom Schließelement 4.

Je nach Ausführungsform des Schlosses 1 kann dieses einen einfachen oder mehrfachen, insbesondere zweifachen Sperrmechanismus 3 aufweisen.

Im gezeigten Ausführungsbeispiel weist der Sperrmechanismus 3 zwei Sperrklinken 3.1, 3.2 auf.

Die Drehachsen D1 der Sperrklinke 3.1 und D2 der Drehfalle 2 sind insbesondere versetzt zueinander angeordnet.

Figur 1 zeigt das Schloss 1 im geschlossenen Zustand und vor einem Öffnen des Sperrmechanismus 3. Der Sperrmechanismus 3 sperrt mittels des zumindest einen Gesperres G1 ein Öffnen des Schlosses 1. Das Gesperre G1 ist beispielsweise zwischen der ersten Sperrklinke 3.1 und der Drehfalle 2 ausgebildet. Ein nicht näher dargestelltes zweites Gesperre kann beispielsweise zwischen einer zweiten Sperrklinke 3.2 und der ersten Sperrklinke 3.1 ausgebildet. Der Sperrmechanismus 3 kann auch nur ein Gesperre G1 umfassen. Alternativ können die Gesperre G1 auch an anderer geeigneter Stelle zwischen Drehfalle 2 und zumindest einer der Sperrklinken 3.1, 3.2 ausgebildet sein.

Zum Öffnen des Schlosses 1 wird die Sperrklinke 3.1 mittels eines manuellen oder motorischen Antriebs angetrieben und dreht sich gemäß Pfeil P1, wodurch die Drehfalle 2 freikommen kann und in eine Offenstellung fallen kann, insbesondere schwenken kann gemäß Pfeil P2.

In der in Figur 1 dargestellten Geschlossenstellung des Schlosses 1 sind die Drehfalle 2 und das Schließelement 4 schließend und kraftbeaufschlagt miteinander gekoppelt. Zur Kraftbeaufschlagung und insbesondere Ruhigstellung des Schließelements 4 in der Drehfalle 2 in der Geschlossenstellung des Schlosses 1 umfasst das Schloss 1 einen Ruhigstellungshebel 5.

Der Ruhigstellungshebel 5 weist eine Drehachse D3 auf. Idealerweise ist diese Achse am Schlossblech befestigt. Der Ruhigstellungshebel 5 ist mit dem Sperrmechanismus 3 derart gekoppelt, dass dieser Ruhigstellungshebel 5 in der Geschlossenstellung des Schlosses 1 und in Sperrstellung des Sperrmechanismus 3 auf das Schließelement 4 in der Drehfalle 2 drückt. Somit ist das Schließelement 4 in seiner Eingriffsstellung kraftbeaufschlagt, wobei die Kraftbeaufschlagung durch den Ruhigstellungshebel 5 das Schließelement 4 in der Drehfalle 2 weitgehend klapperfrei in Eingriff hält.

Der Ruhigstellungshebel 5 weist insbesondere eine Außenkontur 5.1 auf, welche das Schließelement 4 in der Geschlossenstellung selbsthemmend in der Drehfalle 2 hält. Mit anderen Worten: Der Ruhigstellungshebel 5 ist beispielsweise als ein Keilhebel ausgebildet. Durch den selbsthemmenden Eingriff des Ruhigstellungshebels 5 am Schließelement 4 und damit dessen Ruhigstellung sind insbesondere störende Klappergeräusche des Schlosses 1 in der Geschlossenstellung weitgehend vermieden. Die Komponenten, wie der Ruhigstellungshebel 5, das Schließelement 4, beispielsweise ein Schließelement, und die Drehfalle 2 sind hierzu mittels des selbsthemmenden Eingriffs in der Geschlossenstellung in sich gespannt.

Der Ruhigstellungshebel 5 ist insbesondere als ein Kunststoff umspritztes Metallteil, insbesondere umspritztes Stahlteil ausgebildet. Mit anderen Worten: Der Ruhigstellungshebel 5 ist beispielsweise ein Hybridbauteil mit einem inneren Metallteil oder -kern und einer äußeren Kunststoffumspritzung. Eine solche Ausbildung des Ruhigstellungshebels 5 ist weitgehend temperaturunabhängig und somit toleranzfest.

In einer weiteren Ausführungsform ist die Außenkontur 5.1 als eine Exzenterkontur ausgebildet. Beispielsweise weist die Außenkontur 5.1 eine gekrümmte und/oder schräg verlaufende Anschlagfläche 5.2 auf, auch Keilfläche genannt, welche in der Geschlossenstellung gegen das Schließelement 4 drückt. Hierdurch ist eine einfache, sichere und selbsthemmende, kraftbeaufschlagende Kopplung zwischen Ruhigstellungshebel 5 und Schließelement 4 gegeben. Die gekrümmte und/oder schräge Anschlagfläche 5.2 der Außenkontur 5.1 ist derart ausgestaltet, dass eine durch Reibung verursachte Haltekraft zwischen dem Ruhigstellungshebel 5 und dem Schließelement 4 wirkt, so dass diese zueinander selbsthemmend gehalten sind. Dabei ist die Anschlagfläche 5.2 derart ausgelegt, dass eine selbsthemmende Haltekraft zwischen Ruhigstellungshebel 5 und Schließelement 4 eingestellt ist.

In einer möglichen Ausgestaltung weist die gekrümmte und/oder schräge Anschlagfläche 5.2 einen Keilwinkel α in einem Bereich von 8° bis 15°, insbesondere von 10° bis 12°, beispielsweise von 10°, auf. Eine solche gekrümmte und/oder schräge Anschlagfläche 5.2 ermöglicht einen Toleranzausgleich der Komponenten, insbesondere von Schließelement 4 und Ruhigstellungshebel 5 in einem Bereich zwischen 1 mm und 2,5 mm, insbesondere 1,5 mm und 2 mm.

Darüber hinaus ist vorgesehen, dass beim Öffnen des Sperrmechanismus 3 der Ruhigstellungshebel 5 mitgenommen wird und gemäß Pfeil P3 weg von der Drehfalle 2 hin zur Sperrklinke 3.1 schwenkt. Dadurch wird das Schließelement 4 freigegeben. Durch Öffnen des Sperrmechanismus 3, insbesondere der Sperrklinke 3.1, kommt die Drehfalle 2 frei in Richtung Öffnen, wodurch der selbsthemmende Eingriff der Komponenten, insbesondere von Ruhigstellungshebel 5 und Schließelement 4, und damit die Spannung zwischen diesen aufgehoben wird.

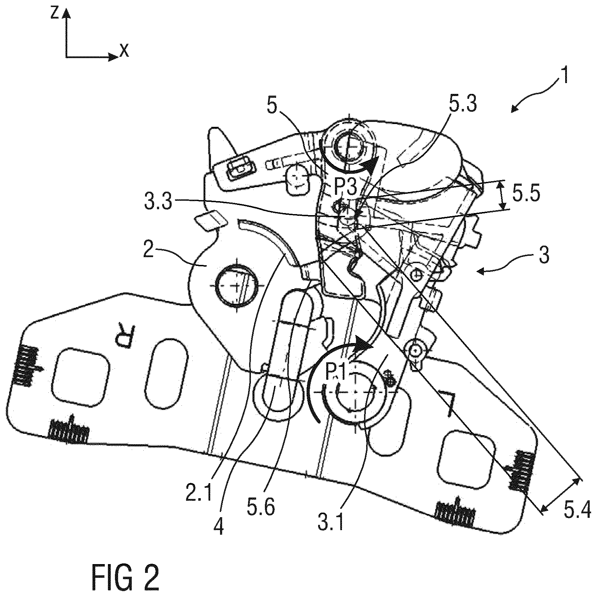

**Figur 2** zeigt schematisch in Draufsicht das Schloss 1 mit dem Schließelement 4, das in Außereingriff mit dem Ruhigstellungshebel 5 gekommen ist. Das heißt, der Ruhigstellungshebel 5 ist aufgrund der Kopplung mit der Sperrklinke 3.1 bei Aktivierung und Auslösen der Öffnung des Schlosses 1 und Drehen der Sperrklinke 3.1 mitgenommen worden und bewegt sich weg von dem Schließelement 4 gemäß Pfeil P3.

Zur Mitnahme des Ruhigstellungshebels 5 weist dieser eine oberflächenseitig abstehende Mitnahmekontur 5.3 auf. Der Sperrmechanismus 3, insbesondere die Sperrklinke 3.1 umfasst einen oberflächenseitig abstehenden Öffnungsnocken 3.3 auf. Dabei kommt der Öffnungsnocken 3.3 des Sperrmechanismus 3 beim Öffnen des Schlosses 1 in Eingriff mit der Mitnahmekontur 5.3 des Ruhigstellungshebels 5. Der Öffnungsnocken 3.3 steht hierzu von der Sperrklinke 3.1 und die Mitnahmekontur 5.3 steht vom Ruhigstellungshebel 5 von zueinander weisenden Oberflächenseiten der Sperrklinke 3.1 bzw. des Ruhigstellungshebels 5 ab. Dies ermöglicht einen kompakten Aufbau des Schlosses 1.

In einer möglichen Ausführungsform weist die Mitnahmekontur 5.3 einen Öffnungsbereich 5.4 und einen Speicherbereich 5.5 auf. Beispielsweise weist die Mitnahmekontur 5.3 eine Bogen- oder eine L-Form auf. Dabei bildet der Öffnungsbereich 5.4 einen L-Schenkel einer L-Form und der Speicherbereich 5.5 den anderen L-Schenkel der L-Form.

Beim Öffnen des Schlosses 1 gleitet der Öffnungsnocken 3.3 entlang des Öffnungsbereichs 5.4 der Mitnahmekontur 5.3. Der Öffnungsbereich 5.4 verläuft ansteigend und nimmt den Ruhigstellungshebel 5 in Richtung Sperrklinke 3.1 und weg von der Drehfalle 2 mit. Anschließend greift der Öffnungsnocken 3.3 des Sperrmechanismus 3 beim weiteren Öffnen des Schlosses 1 bis zur Freigabe des Schließelementes 4 in den Speicherbereich 5.5 der Mitnahmekontur 5.3 ein und hält den Ruhigstellungshebel 5 in dieser Position in der Ruhe- oder Offenstellung, die in Figur 2 gezeigt ist.

In Offenstellung des Schlosses 1, in welcher die Drehfalle 2 und das Schließelement 4 Außereingriff sind, ist der Ruhigstellungshebel 5 in seiner Ruhe- oder Offenstellung mittels des Sperrmechanismus 3 gehalten und dort gespeichert.

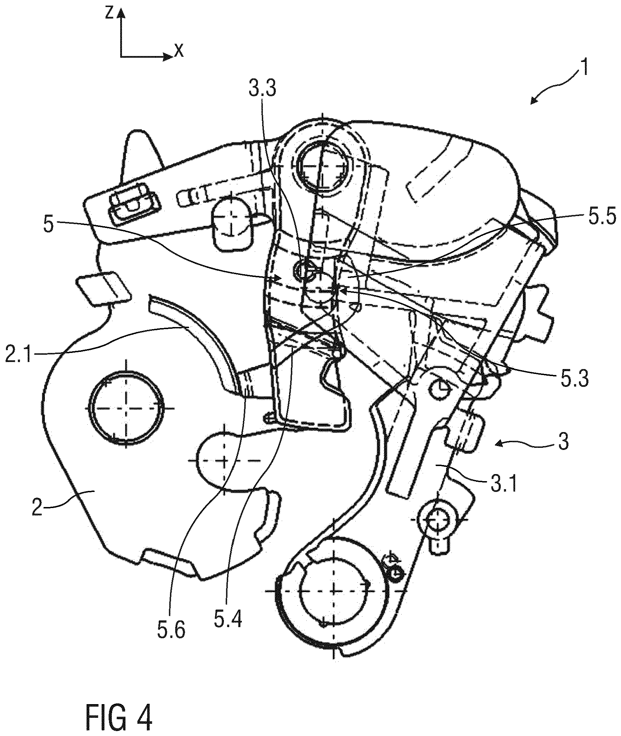

**Figur 4** zeigt schematisch in Draufsicht ein sich öffnendes Schloss 1 mit dem Ruhigstellungshebel 5 im Außereingriff vom Schließelement 4 und in zusätzlich gespeicherter oder gehaltener Offenstellung durch Kopplung und Abstützung des Ruhigstellungshebels 5 an der Drehfalle 2. Hierzu umfasst der Ruhigstellungshebel 5 eine von diesem nach außen abstehende Abstützfahne oder Verlängerung 5.6, die an einer drehfallenseitigen Speicherkontur 2.1 anschlägt und abgestützt ist.

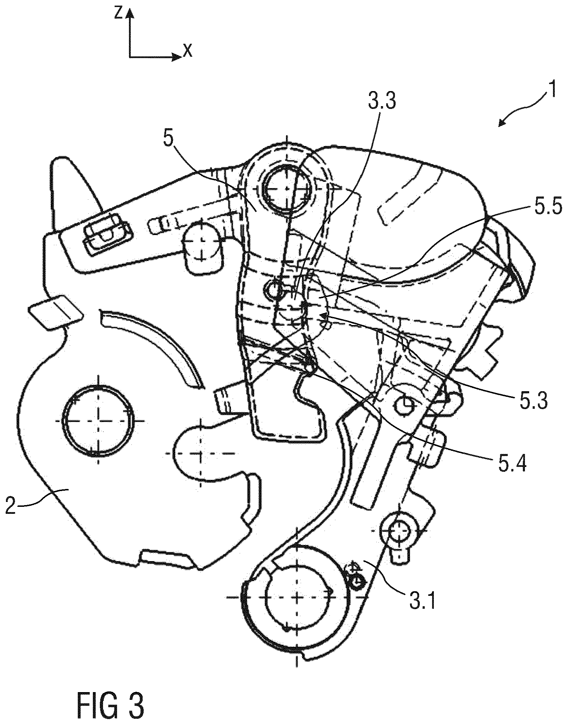

Mit anderen Worten: Beim weiteren Öffnen des Schlosses 1 und Fallen der Drehfalle 2 in die offene Stellung, wie anhand der Sequenz der Figuren **3 bis 5** gezeigt, wird der Ruhigstellungshebel 5 in seiner gespeicherten Offenstellung zusätzlich mittels der Drehfalle 2 gehalten, indem die vom Ruhigstellungshebel 5 abstehende Verlängerung 5.6 in die Halte-/Abstütz- oder Speicherkontur 2.1 eingreift und von dieser gestützt wird. Hierdurch bleibt der Ruhigstellungshebel 5 in seiner Ruhe-oder Offenstellung. Die Speicherkontur 2.1 ist beispielsweise als eine von der Drehfallenoberfläche in Richtung des Ruhigstellungshebels 5 abstehende Speicherrippe ausgebildet. Die Speicherkontur 2.1 weist beispielsweise eine Bogenform auf.

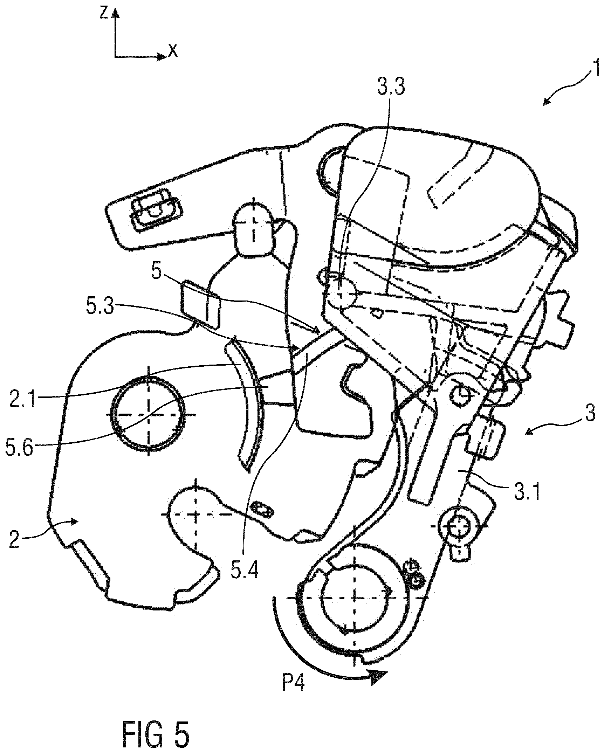

**Figuren 5 bis** 8 zeigen einen Schließvorgang des Schlosses 1.

**Figur 5** zeigt das offene Schloss 1. Der Ruhigstellungshebel 5 wird durch die Kopplung von hebelseitiger Verlängerung 5.6 und drehfallenseitiger Speicherkontur 2.1 und/oder Kopplung von hebelseitiger Mitnahmekontur 5.3 und klinkenseitigem Öffnungsnocken 3.3 weiterhin in gespeicherter Offenstellung gehalten.

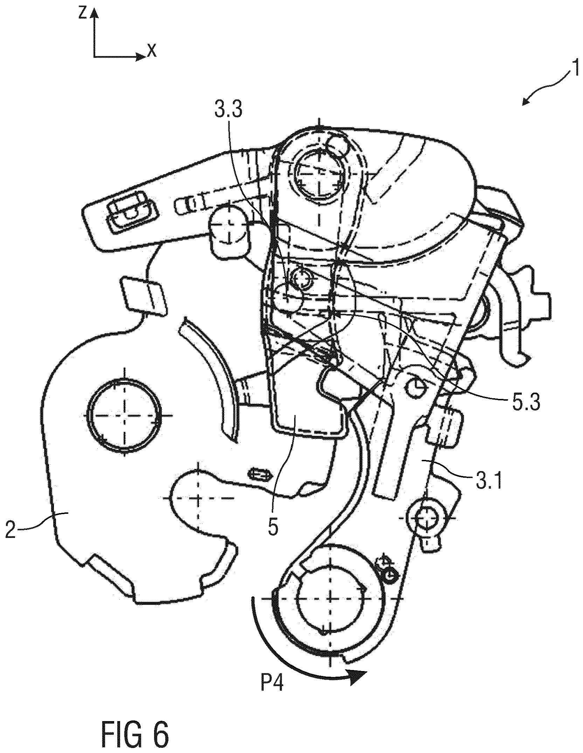

**Figur 6** zeigt das offene Schloss 1 beim Schließen, wobei die Drehfalle 2 und die Sperrklinke 3.1 in eine Vorrasterung (Vorgesperre) eingefallen sind. Der Ruhigstellungshebel 5 wird jetzt nur noch durch die Kopplung von hebelseitiger Verlängerung 5.6 und drehfallenseitiger Speicherkontur 2.1 in gespeicherter Offenstellung gehalten.

Zum Schließen des Schlosses 1 wird die Sperrklinke 3.1 weiter in Schließrichtung gemäß Pfeil P4 bewegt, insbesondere geschwenkt.

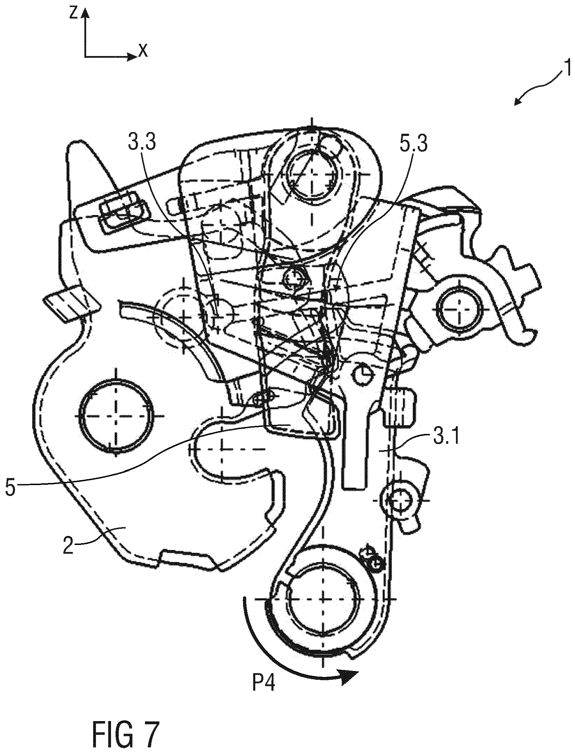

**Figur 7** zeigt die in eine Hauptrasterung und somit in das Gesperre G1 eingefallene Drehfalle 2, in welcher diese Drehfalle 2 rastend mit dem Sperrmechanismus 3 gekoppelt ist. In dieser Stellung kommt die hebelseitige Verlängerung 5.6 von der drehfallenseitigen Speicherkontur 2.1 frei. Somit kommt der Ruhigstellungshebel 5 aus der gespeicherten Ruhe- oder Offenstellung frei und kann zur Ruhigstellung des von der Drehfalle 2 eingefangenen Schließelements 4 in dieses Schließelement 4 selbsthemmend einfallen.

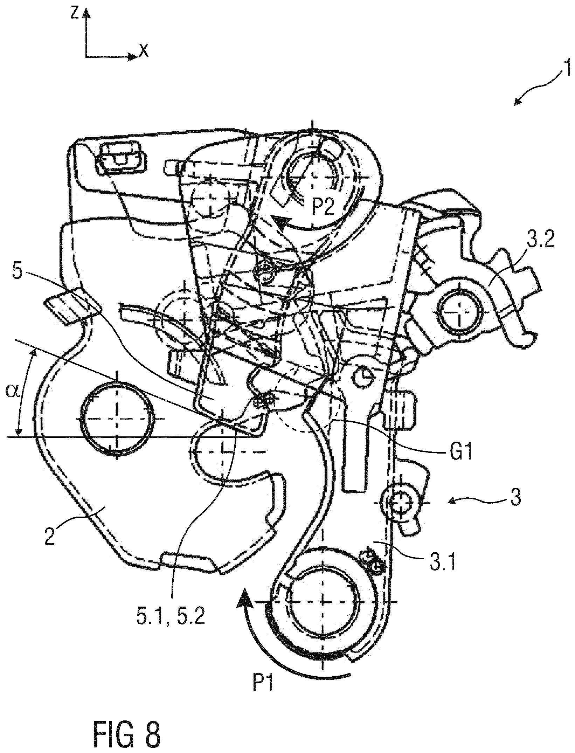

**Figur 8** zeigt den am Schließelement 4 selbsthemmend eingefallenen Ruhigstellungshebel 5 und somit das Schloss 1 in seiner geschlossenen Stellung mit ruhig gestelltem Schließelement 4.

Dabei greift der Ruhigstellungshebel 5 erst nach Kopplung des Schließelements 4 und der Drehfalle 2 und nach erfolgtem Sperren des Schlosses 1 durch den Sperrmechanismus 3 in das in der Geschlossenstellung angeordnete Schließelement 4 selbsthemmend ein.

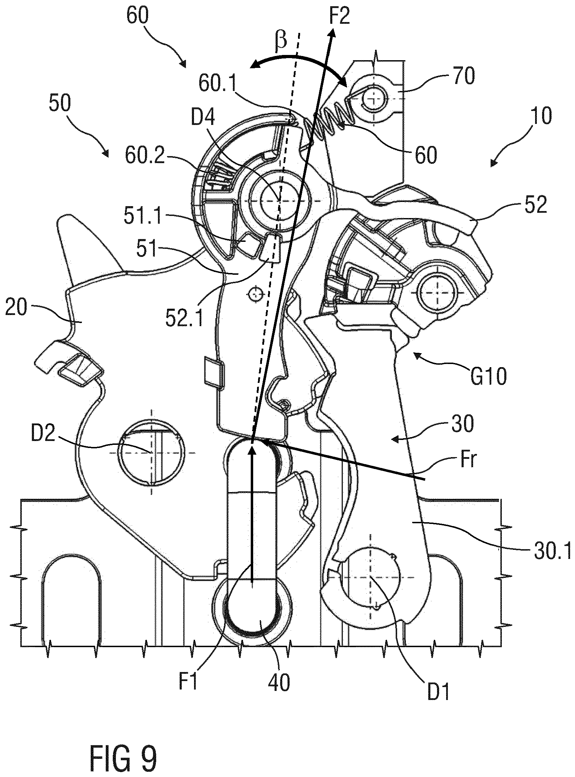

Die **Figuren 9 bis 18** zeigen schematisch in verschiedenen Darstellungen ein erfindungsgemäßes Ausführungsbeispiel für ein Schloss 10 mit einem mehrteiligen Ruhigstellungshebel 50, welches nachfolgend im Detail beschrieben wird.

Die Funktionalität des Ruhigstellungshebels 50 gleicht der zuvor beschriebenen Funktion. Nachfolgend wird im Detail das zweiteilige Design des Ruhigstellungshebels 50 und dessen Funktionen und die Trennung der Funktionen beschrieben.

**Figur 9** zeigt schematisch ein Schloss 10 in geschlossenem Zustand (= Geschlossenzustand). Das Schloss 10 ist beispielsweise ein Schloss für eine Rückenlehne, eine Heckklappe oder einen Heckdeckel eines Kraftfahrzeuges. Alternativ kann es sich auch um ein Türschloss oder um ein Motorhaubenschloss handeln.

Das Schloss 10 umfasst als Gesperre G1 zumindest eine Drehfalle 20 und einen Sperrmechanismus 30, welche beispielsweise rastend ineinander greifen und welcher ein Öffnen der in ein Schließelement 40, zum Beispiel einen Schließelement, eingefallenen Drehfalle 2 sperrt. Je nach Auslegung umfasst das Schloss 10 einen nicht näher dargestellten manuellen oder motorischen Antriebsmechanismus zum Öffnen des Sperrmechanismus 30 und zur Entkopplung der Drehfalle 20 vom Schließelement 40.

Je nach Ausführungsform des Schlosses 10 kann dieses einen einfachen oder mehrfachen, insbesondere zweifachen Sperrmechanismus 30 aufweisen.

Im gezeigten Ausführungsbeispiel weist der Sperrmechanismus 30 eine Sperrklinke 30.1 auf.

Die Drehachsen D1 der Sperrklinke 30.1 und D2 der Drehfalle 20 sind insbesondere versetzt zueinander angeordnet.

**Figur 9** zeigt das Schloss 10 im geschlossenen Zustand und vor einem Öffnen des Sperrmechanismus 30. Der Sperrmechanismus 30 sperrt mittels des zumindest einen Gesperres G1 ein Öffnen des Schlosses 10. Das Gesperre G1 ist beispielsweise zwischen der ersten Sperrklinke 30.1 und der Drehfalle 2 ausgebildet.

Das Schließelement 40 wird mittels des Ruhigstellungshebels 50 gehalten und "ruhig", insbesondere klapperfrei gestellt.

Der Ruhigstellungshebel 50 ist im gezeigten alternativen Ausführungsbeispiel zweiteilig ausgebildet. Der Ruhigstellungshebel 50 umfasst zwei Hebel, insbesondere einen Keilhebel 51 und einen Steuerhebel 52.

Der Keilhebel 51 und der Steuerhebel 52, auch Auslösehebel genannt, sind aufeinander gelagert. Insbesondere sind diese beiden Hebel 51, 52 auf einer gemeinsamen Drehachse D4 gelagert.

Der Keilhebel 51 stellt das Schließelement 40 ruhig und somit klapperfrei. Der Steuerhebel 52 dient dem Öffnen oder Schließen des Ruhigstellungshebels 50 und damit des Keilhebels 51. Durch eine solche Trennung von Auslösen des Ruhigstellungshebels 50 und klemmendes Halten des Schließelements 40 durch den Ruhigstellungshebel 50 ist sichergestellt, dass der Ruhigstellungshebel 50 nicht gegen ein verspanntes System von Schließelement 40 und Ruhigstellungshebel 50, insbesondere Keilhebel 51 geöffnet wird.

Hierzu ist am Steuerhebel 52 ein Federelement 60 angeordnet, welches sicherstellt, dass die miteinander drehbar gekoppelten Hebel - der Steuerhebel 52 und der Keilhebel 51 - sicher wieder einfallen.

**Figur 9** zeigt die am Ruhigstellungshebel 50 wirkenden Kräfte, insbesondere Zugkraft F1, Druckkraft F2 und Haltekraft Fr, insbesondere selbsthemmende Haltekraft, und den die Ruhigstellung des Schließelements 40 bewirkenden Eingriffs-oder Haltewinkel β des Ruhigstellungshebels 50 in einem Bereich von 5° bis 20°, insbesondere 8° bis 15° oder 10° bis 12°, insbesondere einem Haltewinkel β von 10°. Der Keilhebel 51 ist dabei um die Drehachse D4 schwenkbar gelagert und greift in einem Drehwinkel, der im Wesentlichen dem Haltewinkel β entspricht, klemmend am Schließelement 40 ein.

In der geschlossenen Stellung des Schlosses 10 sind die Drehfalle 20 und das Schließelement 40, insbesondere der Schließelement, schließend und kraftbeaufschlagt miteinander gekoppelt und gehalten.

Der Keilhebel 51 weist darüber hinaus einen Mitnahmenocken 51.1 auf. Der Mitnahmenocken 51.1 steht von der Oberfläche des Keilhebels 51 in Richtung des Steuerhebels 52 ab. Der Mitnahmenocken 51.1 kommt dabei in Eingriff mit einem Anschlagelement 52.1, das radial nach außen vom Steuerhebel 52 absteht. Dabei weisen der Mitnahmenocken 51.1 und das Anschlagelement 52.1 korrespondierende Anschlagflächen auf.

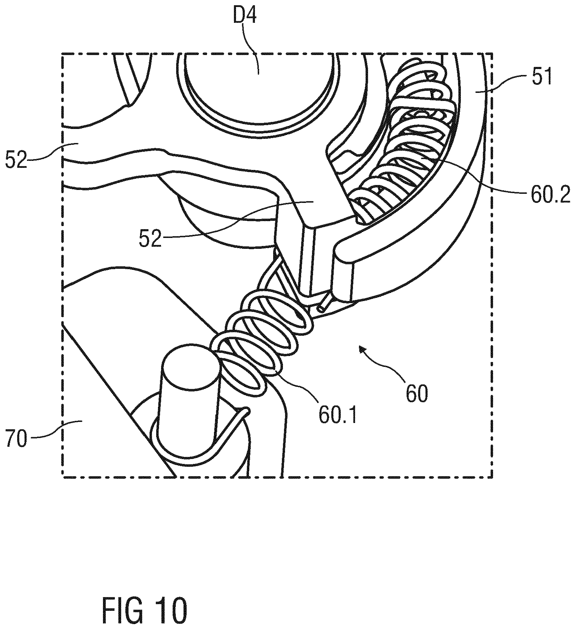

**Figur 10** zeigt das Federelement 60 im Detail. Das Federelement 60 ist mehrteilig, insbesondere zweiteilig ausgebildet. Das Federelement 60 umfasst beispielsweise eine Zugfeder 60.1, die zwischen dem Steuerhebel 52 und einem Festteil 70 des Schlosses 10 angeordnet ist. Diese Zugfeder 60.1 ist vorgespannt und dient einem sicheren Schließen von Steuerhebel 52 und Keilhebel 51, insbesondere einem sicheren Zurückfallen oder Zurückstellen von Steuerhebel 52 und Keilhebel 51 in die Schließstellung des Schlosses 10.

Des Weiteren umfasst das Federelement 60 eine Druckfeder 60.2. Die Druckfeder 60.2 ist zwischen dem Steuerhebel 52 und dem Keilhebel 51 angeordnet. Die Druckfeder 60.2 ist vorgespannt und dient dem Aussteuern des Keilhebels 51 aus dem Schließelementeinlaufbereich. Mit anderen Worten: Im geschlossenen Zustand des Schlosses 10, in welchem der Keilhebel 51 selbsthemmend im Bereich des Haltewinkels β am Schließelement 40 eingreift, wirkt die vorgespannte Druckfeder 60.2 derart, dass der separate Steuerhebel 52 gegen die Kraft der Druckfeder 60.2 bewegt werden kann, um das Schloss 10 aus dem geschlossenen Zustand zu lösen und zu öffnen. Dabei wird die Druckfeder 60.2 komprimiert. Im geöffneten Zustand des Schlosses 10 kommt es dann zu einem Entspannen der Druckfeder 60.2, das nachfolgend näher beschrieben wird.

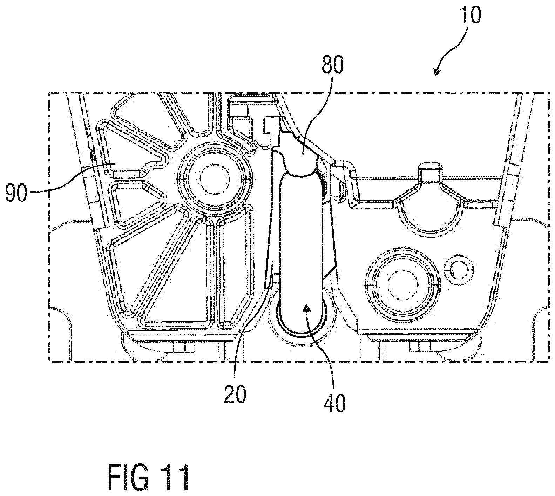

**Figur 11** zeigt das Schloss 10 im geschlossenen Zustand von hinten. Dabei kann optional ein Puffer- oder Dämpferelement 80 am Schließelement 40 vorgesehen sein. Das Dämpferelement 80 ist aus einem elastischen Material, insbesondere aus einem Gummi- oder Kunststoffmaterial gebildet. Die Drehfalle 20 ist mit einem Abdeckelement 90 beispielsweise aus Kunststoff versehen.

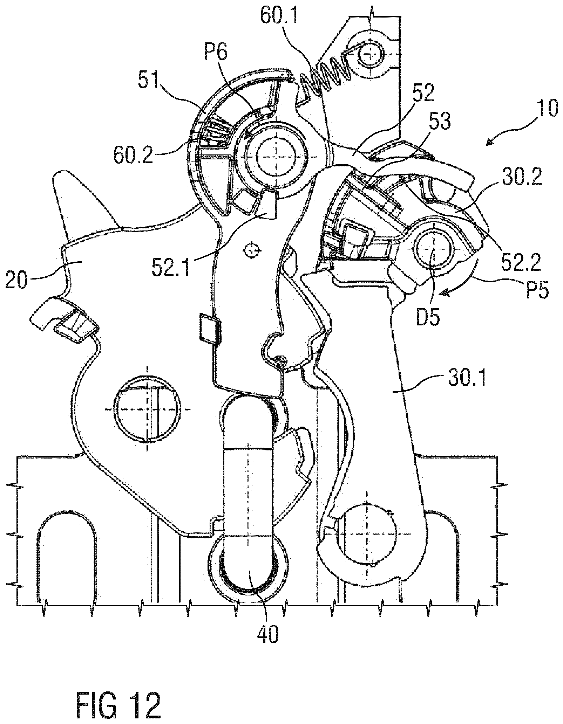

**Figur 12** zeigt das Schloss 10 im Öffnungsprozess, in welchem der Auslöse- oder Steuerhebel 52 betätigt wird. Der Steuerhebel 52 umfasst eine äußere Steuerkontur 52.2, die beim Öffnen des Schlosses 10 in Eingriff kommt mit einem Blockiernocken 53. Der Blockiernocken 53 kann dabei integraler Bestandteil der zweiten Sperrklinke 30.2 oder separat ausgebildet sein.

Der Blockiernocken 53 wird beim Öffnen des Schlosses 10 manuell oder motorisch indirekt beispielsweise über die zweite Sperrklinke 30.2 angetrieben und rotiert um eine weitere Drehachse D5 gemäß Pfeil P5. Mit Beginn der Öffnung treibt der Blockiernocken 53 durch Ineingriffkommen mit der Steuerkontur 52.2 den Steuerhebel 52 an und dreht diesen um die Drehachse D4 gemäß Pfeil P6. Dabei wird zunächst nur der Steuerhebel 52 betätigt und geöffnet. Der Steuerhebel 52 wirkt dabei gegen die Druckfeder 60.2 des Keilhebels 51 und komprimiert diese.

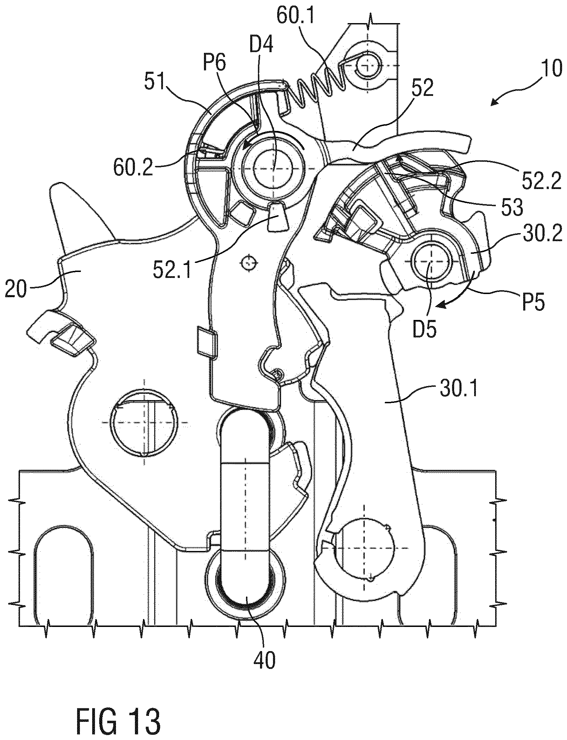

**Figur 13** zeigt den weiteren Öffnungsprozess, wobei der Steuerhebel 52 ausgelenkt und somit geöffnet ist. Dabei ist das Gesperre G1 geöffnet und die Sperrklinke 30.2 außer Sperreingriff.

Der Blockiernocken 53 gleitet entlang der Steuerkontur 52.2 und hebt den Steuerhebel 52 an und lenkt diesen aus, so dass das Anschlagelement 52.1 den Mitnahmenocken 51.1 frei gibt. Die Druckfeder 60.2 wird dabei komprimiert und die Zugfeder 60.1 weiter gespannt. Die Steuerkontur 52.2 ist derart ausgebildet, dass mit weitere Öffnungsrotation gemäß Pfeile P5 und P6 der Steuerhebel 52 keine weitere Auslenkung erfährt.

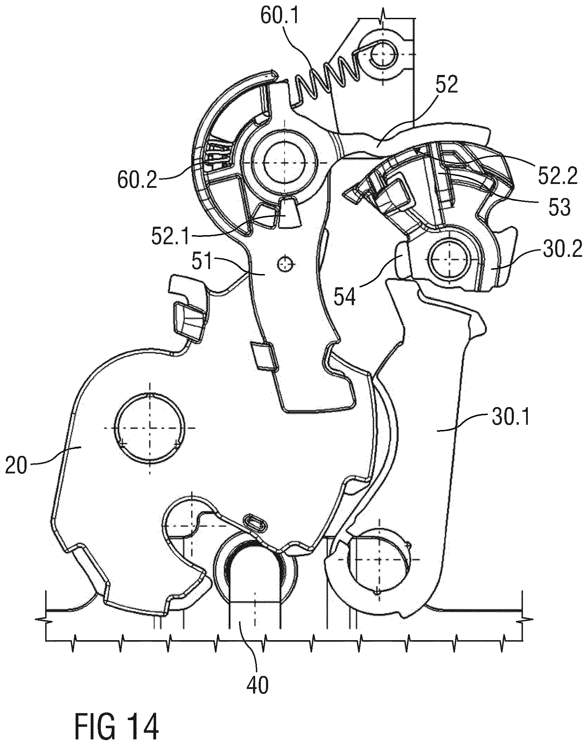

**Figur 14** zeigt das Schloss 10 am Ende des Öffnungsprozesses und im offenen Zustand.

Dabei wird der Steuerhebel 52 in der offenen Schlossstellung durch den Blockiernocken 53 in seiner Position gehalten. Der Sperrmechanismus 30 ist freigegeben. Insbesondere ist die Sperrklinke 30.1 vom Eingriff an der Sperrklinke 30.2 gelöst. Beispielsweise ist ein das Gesperre G1 bewirkender Sperrnocken 54 von der Sperrklinke 30.1 gelöst. Infolgedessen entspannt sich das Schloss 10 und der Keilhebel 51 folgt der weiteren Öffnungsbewegung dem Steuerhebel 52 und kommt außer Eingriff vom Schließelement 40. Dabei wird der Keilhebel 51 durch die Druckfeder 60.2 offen gehalten. Das Schloss 10 ist geöffnet und im offenen Zustand.

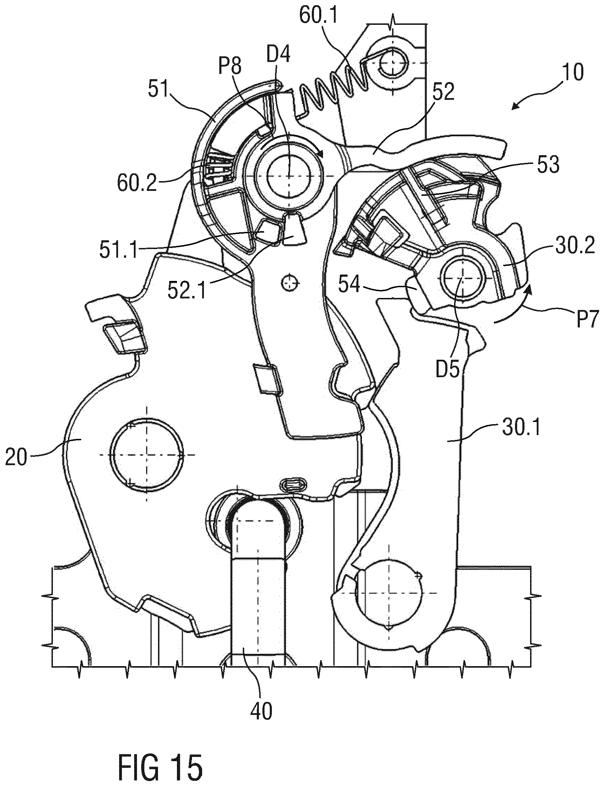

**Figur 15** zeigt den Schließprozess des Schlosses 10. Die Sperrklinke 30.2 wird gemäß Pfeil P7 geschwenkt. Beim Schließen des Schlosses 10 aus dem Offenzustand gemäß Figur 14 wird der Steuerhebel 52 aufgrund der am Blockiernocken 53 anliegenden Steuerkontur 52.2 offen gehalten. Der Sperrnocken 54 kommt wieder in Eingriff zum Vorrasten mit der Sperrklinke 30.1.

Kommt der Blockiernocken 53 in weiterer Schließbewegung frei von der Steuerkontur 52.2 dreht sich der Steuerhebel 52 gemäß Pfeil P8 aufgrund der Zugkraft der Zugfeder 60.1. Dabei nimmt der Steuerhebel 52 den Keilhebel 51 infolge des Eingriffs des Anschlagelements 52.1 am Mitnahmenocken 51.1.

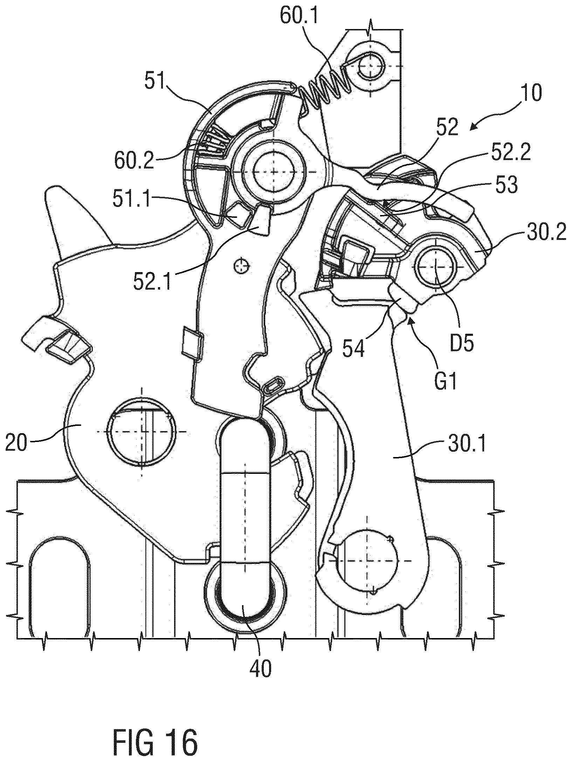

Somit bilden der Keilhebel 51 und der Steuerhebel 52 über das Anschlagelement 52.1 und den Mitnahmenocken 51.1 eine Einheit bei der Schließbewegung infolge der Zugkraft der Zugfeder 60.1. Dabei werden beide Hebel 51, 52 in ihre Schließstellung zurückgestellt und das Schloss 10 kommt mit der Hauptraste der Sperrklinke 30.1 am Sperrnocken 54 in Eingriff und schließt, wie in **Figur 16** gezeigt. Dabei gelangt der Keilhebel 51 in selbsthemmenden Eingriff mit dem Schließelement 40.

Durch weitere Schließbewegung aufgrund der Kraft der Zugefeder 60.1 gelangt der Keilhebel 51 in die gewünschte Schließstellung, die in Figur 9 als Ausgangsstellung gezeigt ist.

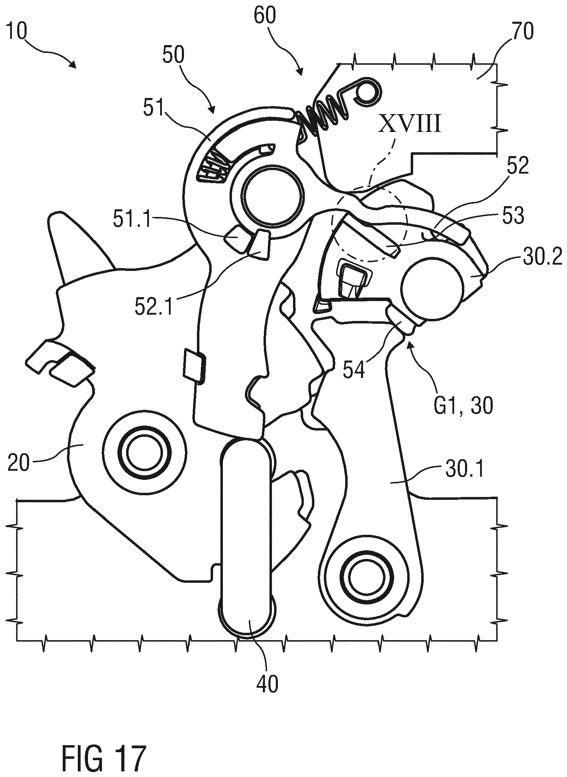

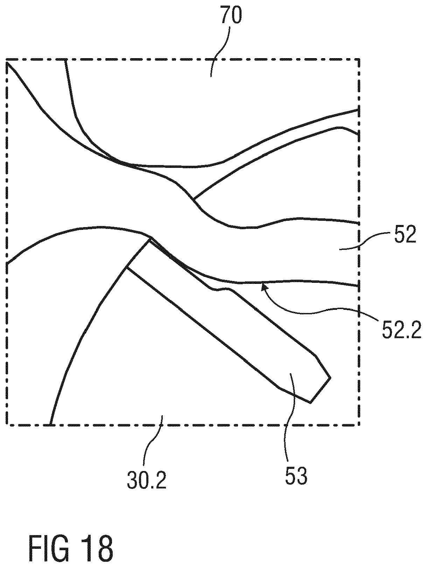

Figuren 17 und 18 zeigen eine mögliche maximale Einfall- oder Schließbewegung des Ruhigstellungshebels 50, insbesondere dessen Keilhebel 51 und Steuerhebel 52.

### BEZUGSZEICHENLISTE

- 1, 10: Schloss
- 2, 20: Drehfalle
- 2.1: Speicherkontur
- 3,30: Sperrmechanismus
- 3.1, 30.1: erste Sperrklinke
- 3.2, 30.2: zweite Sperrklinke
- 3.3: Öffnungsnocken
- 4, 40: Schließelement
- 5,50: Ruhigstellungshebel
- 5.1: Außenkontur
- 5.2,50.2: Anschlagfläche
- 5.3,50.3: Mitnahmekontur
- 5.4, 50.4: Öffnungsbereich
- 5.5, 50.5: Speicherbereich
- 5.6: Verlängerung
- 51: Keilhebel
- 51.1: Mitnahmenocken
- 52: Steuerhebel
- 52.1: Anschlagelement
- 52.2: äußere Steuerkontur
- 53: Blockiernocken
- 54: Sperrnocken
- 60: Federelement
- 60.1: Zugfeder
- 60.2: Druckfeder
- 70: Festteil des Schlosses
- 80: Dämpferelement
- 90: Abdeckelement

- α: Keilwinkel
- β: Haltewinkel
- D1 bis D5: Drehachse
- G1: Gesperre
- P1 bis P4: Pfeil
- x: x-Achse
- z: z-Achse
- F1: Zugkraft
- F2: Druckkraft
- Fr: Haltekraft

## Patentansprüche

1. Schloss (1, 10), insbesondere für eine Rückenlehne oder eine Heckklappe eines Kraftfahrzeuges, umfassend zumindest:
- eine Drehfalle (2) mit einem Schließelement (4),
- einen zugeordneten Sperrmechanismus (3), insbesondere eine Sperrklinke (3.1, 3.2), zum Sperren der Drehfalle (2) in eine Geschlossenstellung des Schlosses (1), in welcher die Drehfalle (2) und das Schließelement (4) schließend gekoppelt sind, und
- einen Ruhigstellungshebel (5, 50), der mit dem Sperrmechanismus (3) gekoppelt ist, wobei der Ruhigstellungshebel (5, 50) eine Außenkontur aufweist, welche das Schließelement (4) in der Geschlossenstellung des Schlosses (1) selbsthemmend in der Drehfalle (2) hält, **dadurch gekennzeichnet,**
**dass** der Ruhigstellungshebel (50) zwei- oder mehrteilig ausgebildet ist, so dass ein Auslösen oder Öffnen des Ruhigstellungshebels (50) von einer Ruhigstellung des Schließelements (4) mittels Selbsthemmung in der Drehfalle (2) getrennt ist.

2. Schloss (1, 10) nach Anspruch 1, wobei der Ruhigstellungshebel (5, 50) als ein umspritztes Metallteil, insbesondere umspritztes Stahlteil ausgebildet ist.

3. Schloss (1, 10) nach Anspruch 1 oder 2, wobei die Außenkontur (5.1) als eine Exzenterkontur ausgebildet ist und eine gekrümmte und/oder schräge Anschlagfläche (5.2, 50.2) aufweist, welche in der Geschlossenstellung gegen das Schließelement (4) drückt.

4. Schloss (1, 10) nach Anspruch 3, wobei die gekrümmte und/oder schräge Anschlagfläche (5.2, 50.2) einen Keilwinkel (α) in einem Bereich von 8° bis 15°, insbesondere von 10° bis 12° aufweist.

5. Schloss (1, 10) nach einem der vorhergehenden Ansprüche, wobei beim Öffnen des Sperrmechanismus (3) der Ruhigstellungshebel (5, 50) das Schließelement (4) freigibt.

6. Schloss (1, 10) nach einem der vorhergehenden Ansprüche, wobei in Offenstellung, in welcher die Drehfalle (2) und das Schließelement (4) Außereingriff sind, der Ruhigstellungshebel (5, 50) in einer Ruhe- oder Offenstellung zumindest mittels des Sperrmechanismus (3) und/oder der Drehfalle (2) gehalten ist.

7. Schloss (1, 10) nach einem der vorhergehenden Ansprüche, wobei der Sperrmechanismus (3) einen oberflächenseitig abstehenden Öffnungsnocken (3.3) aufweist.

8. Schloss (1, 10) nach einem der vorhergehenden Ansprüche, wobei der Ruhigstellungshebel (5, 50) eine oberflächenseitig abstehende Mitnahmekontur (5.3, 50.3) aufweist.

9. Schloss (1, 10) nach Anspruch 7 oder 8, wobei der Öffnungsnocken (3.3) des Sperrmechanismus (3) beim Öffnen des Schlosses (1) in Eingriff mit der Mitnahmekontur (5.3, 50.3) des Ruhigstellungshebels (5, 50) kommt.

10. Schloss (1, 10) nach Anspruch 8 oder 9, wobei die Anschlag- oder Mitnahmekontur (5.3, 50.3) einen Öffnungsbereich (5.4, 50.4) und einen Speicherbereich (5.5, 50.5) aufweist.

11. Schloss (1, 10) nach Anspruch 10, wobei der Öffnungsnocken (3.3) beim Öffnen des Schlosses (1) entlang des Öffnungsbereichs (5.4, 50.4) der Mitnahmekontur (5.3, 50.3) gleitet und den Ruhigstellungshebel (5, 50) mitnimmt.

12. Schloss (1, 10) nach Anspruch 10 oder 11, wobei der Öffnungsnocken (3.3) des Sperrmechanismus (3) beim Öffnen des Schlosses (1) bis zur Freigabe des Schließelementes (4) in den Speicherbereich (5.5, 50.5) der Mitnahmekontur (5.3, 50.3) eingreift und den Ruhigstellungshebel (5, 50) in der Ruhe- oder Offenstellung hält.

13. Schloss (1, 10) nach einem der vorhergehenden Ansprüche, wobei nach Öffnen des Schlosses (1) und bei freigegebenem Schließelement (4) der Ruhigstellungshebel (5, 50) mittels der Drehfalle (2) oder einer oder mehrerer Sperrklinken (3.1, 3.2) in der Ruhe- oder Offenstellung gehalten ist.

14. Schloss (1, 10) nach einem der vorhergehenden Ansprüche, wobei die Drehfalle (2) oder eine der Sperrklinken (3.1, 3.2) eine Speicherkontur (2.1) aufweist, welche nach Freigabe des Schließelements (4) den Ruhigstellungshebel (5, 50) in der Ruhe- oder Offenstellung hält.

15. Schloss (1, 10) nach einem der vorhergehenden Ansprüche, wobei beim Schließen nach Kopplung des Schließelements (4) und der Drehfalle (2) und nach erfolgtem Sperren des Sperrmechanismus (3) der Ruhigstellungshebel (5, 50) in das in der Geschlossenstellung angeordnete Schließelement (4) selbsthemmend eingreift.

16. Schloss (1, 10) nach einem der vorhergehenden Ansprüche, wobei der Ruhigstellungshebel (5, 50) einen Keilhebel (51) und einen Steuerhebel (52) umfasst.

17. Schloss (1, 10) nach Anspruch 16, wobei der Keilhebel (51) und der Steuerhebel (52) auf einer gemeinsamen Drehachse gelagert sind.

18. Schloss (1, 10) nach Anspruch 16 oder 17, wobei der Keilhebel (51) und der Steuerhebel (52) über mindestens ein Federelement (60), insbesondere eine Kupplungsfeder, miteinander verbunden sind.

## Claims

1. Lock (1, 10), in particular for a backrest or a tailgate of a motor vehicle, comprising at least:
- a rotary latch (2) with a locking element (4),
- an associated arresting mechanism (3), in particular a catch (3.1, 3.2), for arresting the rotary latch (2) in a closed position of the lock (1), in which the rotary latch (2) and the locking element (4) are coupled with locking action, and
- an immobilization lever (5, 50), which is coupled to the arresting mechanism (3), wherein the immobilization lever (5, 50) has an outer contour which, in the closed position of the lock (1), retains the locking element (4) with self-locking action in the rotary latch (2), **characterized in that** the immobilization lever (50) is formed in two or more parts, and therefore triggering or opening operation of the immobilization lever (50) is separated from an immobilization position of the locking element (4) by means of self-locking in the rotary latch (2).

2. Lock (1, 10) according to Claim 1, wherein the immobilization lever (5, 50) is designed in the form of an encapsulated metal part, in particular an encapsulated steel part.

3. Lock (1, 10) according to Claim 1 or 2, wherein the outer contour (5.1) is designed in the form of an eccentric contour and has a curved and/or sloping stop surface (5.2, 50.2), which in the closed position pushes again the locking element (4) .

4. Lock (1, 10) according to Claim 3, wherein the curved and/or sloping stop surface (5.2, 50.2) has a wedge angle (α) ranging from 8° to 15°, in particular from 10° to 12°.

5. Lock (1, 10) according to one of the preceding claims, wherein, when the arresting mechanism (3) is being opened, the immobilization lever (5, 50) frees the locking element (4).

6. Lock (1, 10) according to one of the preceding claims, wherein in the open position, in which the rotary latch (2) and the locking element (4) are not in engagement, the immobilization lever (5, 50) is retained in a rest or open position at least by means of the arresting mechanism (3) and/or the rotary latch (2).

7. Lock (1, 10) according to one of the preceding claims, wherein the arresting mechanism (3) has an opening protuberance (3.3) projecting from its surface.

8. Lock (1, 10) according to one of the preceding claims, wherein the immobilization lever (5, 50) has a carry-along contour (5.3, 50.3) projecting from its surface.

9. Lock (1, 10) according to Claim 7 or 8, wherein, when the lock (1) is being opened, the opening protuberance (3.3) of the arresting mechanism (3) comes into engagement with the carry-along contour (5.3, 50.3) of the immobilization lever (5, 50).

10. Lock (1, 10) according to Claim 8 or 9, wherein the stop contour or carry-along contour (5.3, 50.3) has an open region (5.4, 50.4) and a storage region (5.5, 50.5).

11. Lock (1, 10) according to Claim 10, wherein, when the lock (1) is being opened, the opening protuberance (3.3) slides along the open region (5.4, 50.4) of the carry-along contour (5.3, 50.3) and carries along the immobilization lever (5, 50) .

12. Lock (1, 10) according to Claim 10 or 11, wherein, when the lock (1) is being opened and until the locking element (4) is freed, the opening protuberance (3.3) of the arresting mechanism (3) engages in the storage region (5.5, 50.5) of the carry-along contour (5.3, 50.3) and retains the immobilization lever (5, 50) in the rest or open position.

13. Lock (1, 10) according to one of the preceding claims, wherein, once the lock (1) has been opened and with the locking element (4) freed, the immobilization lever (5, 50) is retained in the rest or open position by means of the rotary latch (2) or one or more catches (3.1, 3.2).

14. Lock (1, 10) according to one of the preceding claims, wherein the rotary latch (2) or one of the catches (3.1, 3.2) has a storage contour (2.1) which, once the locking element (4) has been freed, retains the immobilization lever (5, 50) in the rest or open position.

15. Lock (1, 10) according to one of the preceding claims, wherein, during locking action once the locking element (4) and the rotary latch (2) have been coupled and once the arresting mechanism (3) has been arrested, the immobilization lever (5, 50) engages with self-locking action in the locking element (4) arranged in the closed position.

16. Lock (1, 10) according to one of the preceding claims, wherein the immobilization lever (5, 50) comprises a wedge lever (51) and a control lever (52) .

17. Lock (1, 10) according to Claim 16, wherein the wedge lever (51) and the control lever (52) are mounted along a common axis of rotation.

18. Lock (1, 10) according to Claim 16 or 17, wherein the wedge lever (51) and the control lever (52) are connected to one another via at least one spring element (60), in particular a coupling spring.

## Revendications

1. Serrure (1, 10), en particulier pour un dossier ou un hayon arrière d'un véhicule automobile, comportant au moins :
- un pêne pivotant (2) doté d'un élément de fermeture (4),
- un mécanisme de blocage (3) associé, en particulier un cliquet de blocage (3.1, 3.2), pour le blocage du pêne pivotant (2) dans une position fermée de la serrure (1), dans laquelle le pêne pivotant (2) et l'élément de fermeture (4) sont accouplés de manière à réaliser une fermeture, et
- un levier d'immobilisation (5, 50), qui est accouplé au mécanisme de blocage (3), le levier d'immobilisation (5, 50) comprenant un contour extérieur, lequel maintient l'élément de fermeture (4) de manière autobloquante dans le pêne pivotant (2) dans la position fermée de la serrure (1), **caractérisée en ce que** le levier d'immobilisation (50) est réalisé en deux ou plusieurs parties, de sorte qu'un déclenchement ou une ouverture du levier d'immobilisation (50) soit séparé d'une immobilisation de l'élément de fermeture (4) par autoblocage dans le pêne pivotant (2).

2. Serrure (1, 10) selon la revendication 1, le levier d'immobilisation (5, 50) étant réalisé comme pièce métallique enrobée par injection, en particulier comme pièce en acier enrobée par injection.

3. Serrure (1, 10) selon la revendication 1 ou 2, le contour extérieur (5.1) étant réalisé comme contour excentrique et comprenant une surface de butée (5.2, 50.2) incurvée et/ou oblique, laquelle presse contre l'élément de fermeture (4) dans la position fermée.

4. Serrure (1, 10) selon la revendication 3, la surface de butée (5.2, 50.2) incurvée et/ou oblique présentant un angle de cale (α) dans une plage de 8° à 15°, en particulier de 10° à 12°.

5. Serrure (1, 10) selon l'une des revendications précédentes, le levier d'immobilisation (5, 50) libérant l'élément de fermeture (4) lors de l'ouverture du mécanisme de blocage (3).

6. Serrure (1, 10) selon l'une des revendications précédentes, le levier d'immobilisation (5, 50) étant maintenu dans une position de repos ou ouverte au moins au moyen du mécanisme de blocage (3) et/ou du pêne pivotant (2) dans la position ouverte dans laquelle le pêne pivotant (2) et l'élément de fermeture (4) sont hors de prise.

7. Serrure (1, 10) selon l'une des revendications précédentes, le mécanisme de blocage (3) comprenant une came d'ouverture (3.3) faisant saillie du côté de la surface.

8. Serrure (1, 10) selon l'une des revendications précédentes, le levier d'immobilisation (5, 50) comprenant un contour d'entraînement (5.3, 50.3) faisant saillie du côté de la surface.

9. Serrure (1, 10) selon la revendication 7 ou 8, la came d'ouverture (3.3) du mécanisme de blocage (3) venant en prise avec le contour d'entraînement (5.3, 50.3) du levier d'immobilisation (5, 50) lors de l'ouverture de la serrure (1).

10. Serrure (1, 10) selon la revendication 8 ou 9, le contour de butée ou d'entraînement (5.3, 50.3) comprenant une région d'ouverture (5.4, 50.4) et une région de stockage (5.5, 50.5).

11. Serrure (1, 10) selon la revendication 10, la came d'ouverture (3.3) glissant le long de la région d'ouverture (5.4, 50.4) du contour d'entraînement (5.3, 50.3) lors de l'ouverture de la serrure (1) et entraînant le levier d'immobilisation (5, 50).

12. Serrure (1, 10) selon la revendication 10 ou 11, la came d'ouverture (3.3) du mécanisme de blocage (3) venant en prise dans la région de stockage (5.5, 50.5) du contour d'entraînement (5.3, 50.3) lors de l'ouverture de la serrure (1) jusqu'à la libération de l'élément de fermeture (4) et maintenant le levier d'immobilisation (5, 50) dans la position de repos ou ouverte.

13. Serrure (1, 10) selon l'une des revendications précédentes, le levier d'immobilisation (5, 50) étant maintenu dans la position de repos ou ouverte au moyen du pêne pivotant (2) ou d'un ou plusieurs cliquets de blocage (3.1, 3.2) après l'ouverture de la serrure (1) et en cas d'élément de fermeture (4) libéré.

14. Serrure (1, 10) selon l'une des revendications précédentes, le pêne pivotant (2) ou l'un des cliquets de blocage (3.1, 3.2) comprenant un contour de stockage (2.1), lequel maintient le levier d'immobilisation (5, 50) dans la position de repos ou ouverte après la libération de l'élément de fermeture (4).

15. Serrure (1, 10) selon l'une des revendications précédentes, le levier d'immobilisation (5, 50) venant en prise de manière autobloquante dans l'élément de fermeture (4) disposé dans la position fermée lors de la fermeture après l'accouplement de l'élément de fermeture (4) et du pêne pivotant (2) et une fois le blocage du mécanisme de blocage (3) effectué.

16. Serrure (1, 10) selon l'une des revendications précédentes, le levier d'immobilisation (5, 50) comportant un levier formant cale (51) et un levier de commande (52).

17. Serrure (1, 10) selon la revendication 16, le levier formant cale (51) et le levier de commande (52) étant montés sur un axe de rotation commun.

18. Serrure (1, 10) selon la revendication 16 ou 17, le levier formant cale (51) et le levier de commande (52) étant reliés l'un à l'autre par le biais d'au moins un élément ressort (60), en particulier d'un ressort d'accouplement.
